# EUROPÄISCHE PATENTSCHRIFT

(11) **EP 0 597 209 B1**
(45) Veröffentlichungstag und Bekanntmachung des Hinweises auf die Patenterteilung: **26.03.1997**
(21) Anmeldenummer: 93114855.5
(22) Anmeldetag: 15.09.1993
(51) Int. Cl.: G02B 6/42, G02B 7/02

(54) **Optisches System mit einem Linsensystem und einer Lichtquelle**
Optical system with lens system and light source
Système optique avec (un) système de lentilles et (une) source de lumière

(30) Priorität: 09.11.1992 DE 4237775
(43) Veröffentlichungstag der Anmeldung: 18.05.1994
(73) Patentinhaber: Optische Werke G. Rodenstock, 80469 München (DE)
(72) Erfinder: Hofbauer, Engelbert, D-81539 München (DE); Metzger, Michael, D-82211 Herrsching (DE); Bleicher, Jakob, D-81371 München (DE); König, Joachim, D-81673 München (DE); Schehrer, Ingrid, D-80538 München (DE); Geiger, Alexandra, D-81379 München (DE)

(56) Entgegenhaltungen:
- US-A- 4 993 801
- US-A- 5 048 050

## Beschreibung

Die Erfindung betrifft ein optisches System mit einem Linsensystem in einer Aufnahme, mit einer Lichtquelle in einer Fassung, mit einem Federglied zwischen Fassung und Aufnahme und mit einer Einrichtung, die die Lage der Lichtquelle in Richtung der optischen Achse des Linsensystems gegenüber diesem festlegt.

Ein derartiges System ist durch die DE-OS 31 42 630 bekannt. Hierbei ist ein Halbleiterlaser in einem rohrförmigen Halter in axialer Richtung des Halters gegen einen Anschlag positioniert. Zwischen dem Linsensystem und dem Anschlag ist ein Federglied angeordnet. Auf der von dem Federglied abgekehrten Seite des Linsensystems ist ein Verschlußglied angeordnet. Das Linsensystem wird mit Hilfe des Verschlußgliedes in axialer Richtung gegen den Druck des Federgliedes verschoben, bis sich der Halbleiterlaser im Brennpunkt des Linsensystems befindet. In dieser Position wird das Verschlußglied am Halter fixiert, z.B. verschweißt.

Bei diesem System ist es jedoch nicht ohne weiteres möglich, einen Austausch der Laserlichtquelle und/oder des Linsensystems vorzunehmen. Es ist nicht möglich, die Position der Laserlichtquelle im eingebauten Zustand ohne Werkzeug axial zu verändern. Schließlich sind die Paßlufttoleranzen des bekannten Systems relativ groß.

Durch die EP-A2- 179 426 ist eine Fassung für optische Einrichtungen bekannt, die Linearbewegungen in drei Richtungen sowie Rotationsbewegungen um drei Achsen zuläßt. Es ist sehr zeitaufwendig, mit dieser Fassung eine gewünschte Position für eine optische Einrichtung einzustellen. Die Fassung setzt sich aus zahlreichen Elementen zusammen und ist daher relativ teuer. Auch bei dieser Fassung sind die Paßlufttoleranzen relativ groß.

Im deutschen Gebrauchsmuster 90 02 698 ist ein Kollimator für Laserdioden beschrieben. Hierbei kann die Laserdiode ausschließlich in einer zur optischen Achse senkrechten Ebene bewegt werden. Die axiale Einstellung parallel zur optischen Achse erfolgt, indem der Kollimator über ein Gewinde gedreht und somit in axialer Richtung bewegt wird. Hierbei tritt jedoch eine Taumelbewegung auf, die einen entsprechenden Taumelfehler verursacht. Nach der Fixierung des Kollimators kann es erforderlich sein, daß die Laserdiode nachjustiert werden muß.

Der Erfindung liegt die Aufgabe zugrunde, ein System der eingangs geschilderten Art anzugeben, bei dem es bei kleiner Baugröße und geringem Gewicht problemlos möglich ist, die Lichtquelle und/oder das Linsensystem auszutauschen und bei dem auf einfache Weise eine spielfreie Positionierung in axialer Richtung, insbesondere eine Fokussierung mit großer Genauigkeit möglich ist und bei dem bei einer axialen Verstellung keine Verdrehung der Lichtquelle gegenüber dem Linsensystem erfolgt.

Diese Aufgabe wird erfindungsgemäß durch die Merkmale des kennzeichnenden Teils der Patentansprüche 1 bzw. 6 gelöst. Vorteilhafte Ausgestaltungen sind in den Unteransprüchen angegeben.

Erfindungsgemäß sind das Linsensystem und die Lichtquelle jeweils in einer Aufnahme aufgenommen. Die beiden Aufnahmen sind über ein Halteelement miteinander verbunden und relativ zueinander in Richtung der optischen Achse verstellbar.

Bei dem erfindungsgemäßen optischen System ist keine Justage in X- und Y- Richtung, d.h. in einer zur optischen Achse des Linsensystems senkrechten Ebene, notwendig, da die erforderliche Genauigkeit über die gungstoleranzen erreicht werden kann.

Gemäß Anspruch 1 sind wenigstens zwei Paßstifte vorgesehen, die einerseits in der Aufnahme des Linsensystems in Preßpassung und andererseits in Bohrungen in der Aufnahme für die Lichtquelle aufgenommen sind. Eine der Bohrungen ist eine Paßbohrung, in der der entsprechende Paßstift parallel zur optischen Achse bewegbar mit Gleitpassung sitzt. Unter Gleitpassung wird eine Passung mit geringem Spiel verstanden.

Die Paßbohrung und der in ihr aufgenommene Paßstift verhindern die Rotation der Lichtquellenaufnahme gegenüber der Optik. Bei der Justage in Z-Richtung (parallel zur optischen Achse) bleibt somit die radiale Orientierung der Lichtquelle gegenüber dem optomechanischen System erhalten. Der weitere Paßstift verhindert die Rotation der Lichtquellenaufnahme um die Längsachse der Paßbohrung. Er begrenzt das Umkehrspiel bzw. den Taumelfehler.

Im Bereich der Paßstifte ist je ein Federglied zwischen der Aufnahme für die Lichtquelle und der Linsensystemaufnahme angeordnet. Die Federn, die gemäß einer teilhaften Ausgestaltung der Erfindung durch die Paßstifte geführt werden, haben die Funktion, das Gewindespiel (Umkehrspiel) zu entfernen und einen gleichmäßigen Verlauf über die Justierstrecke zu gewährleisten.

Das erfindungsgemäße System ermöglicht eine spielfreie Positionierung in axialer Richtung mit einer Genauigkeit, die besser als 0,0005 mm ist. Da die beiden Aufnahmen mittels eines Halteelements relativ zueinander verstellbar sind, besitzt das vorgeschlagene optische System einen Fokussierbereich, so daß der Abbildungsmaßstab einstellbar ist: Somit ist ein konvergenter, afokaler und divergenter Strahlenaustritt möglich.

Das vorgeschlagene optische System besitzt eine kleine Baugröße und ein geringes Gewicht. Die Komponenten Lichtquelle und Linsensystem sind jederzeit austauschbar, da die beiden Aufnahmen für diese Komponenten voneinander gelöst und wieder verbunden werden können.

Das Linsensystem ist auf besonders einfache Weise austauschbar, wenn gemäß einer bevorzugten Ausgestaltung der Erfindung die Paßstifte nicht direkt in der Aufnahme für das Linsensystem aufgenommen sind, sondern in einer Halterung, die im Paßsitz mit der Aufnahme des Linsensystems verbunden ist.

Eine bevorzugte weitere Ausgestaltung der Erfindung ist in Patentanspruch 4 angegeben. Neben dem in einer Paßbohrung aufgenommenen Paßstift ist ein weiterer Paßstift in einem Langloch aufgenommen, um eventuelle Fertigungstoleranzen ausgleichen zu können. Der weitere Paßstift ist parallel zur optischen Achse bewegbar und sitzt in dem Langloch mit Gleitpassung. Erfindungsgemäß kann ein dritter Paßstift vorgesehen sein. Dieser Stift muß nicht notwendigerweise als Paßstift ausgebildet sein, da die Aufgabe dieses Stiftes lediglich die ist, eine Führung für eine dritte Feder zu bilden und somit eine Verklemmung vermieden wird. Die zugehörige Bohrung in der Aufnahme des Linsensystems kann überhöht ausgeführt werden, da die Funktion durch die Passungskombinationen "Paßstift in Paßbohrung" und "Paßstift in Langloch" ausreichend genau bestimmt ist.

Durch die bevorzugte Ausgestaltung des beanspruchten optischen Systems gemäß Anspruch 5 ist die Position der Lichtquelle im eingebauten Zustand besonders einfach, d.h. ohne Werkzeug axial veränderbar.

Gemäß Anspruch 6 wird die Funktion der Paßstifte aufgeteilt: Zum Einen durch Ansatzschrauben, die in der Aufnahme für das Linsensystem verankert und in Bohrungen in der Aufnahme für die Lichtquelle aufgenommen sind, zum Anderen nimmt die Aufnahme für das Linsensystem die weitere Aufnahme für die Lichtquelle in Richtung der optischen Achse verstellbar im Paßsitz auf.

Bevorzugte Ausgestaltungen dieser Variante der Erfindung sind in den Patentansprüchen 7-9 angegeben.

Von besonderem Vorteil ist, wenn gemäß einer weiteren Ausgestaltung des vorgeschlagenen optischen Systems die Aufnahme für die Lichtquelle aus isolierendem Material besteht. Eine derartige Aufnahme garantiert die Potentialfreiheit der Lichtquelle und eines eventuell dazu gehörigen Halteringes gegenüber der restlichen Mechanik-Optik-Kombination und damit insbesondere auch gegenüber der Halterung des gesamten mechanischen Systems.

Die Lichtquelle des vorgeschlagenen optischen Systems kann grundsätzlich beliebiger Art sein. Das System eignet sich aber besonders für "punktförmige" Lichtquellen, d.h. für Lichtquellen mit kleiner strahlender Fläche (Durchmesser in der Größenordnung von einigen µm), wie z.B. Halbleiterlaserdioden.

Unter einem Linsensystem wird nicht nur ein mehrlinsiges, sondern auch ein aus nur einer Linse bestehendes System verstanden.

Im folgenden sollen anhand schematischer Skizzen Ausführungsbeispiele des vorgeschlagenen optischen Systems läutert werden:

Es zeigen:
- Fig. 1: eine Schnittdarstellung einer ersten Variante des vorgeschlagenen optischen Systems.
- Fig. 2: eine Schnittdarstellung der Aufnahme für die Laserlichtquelle

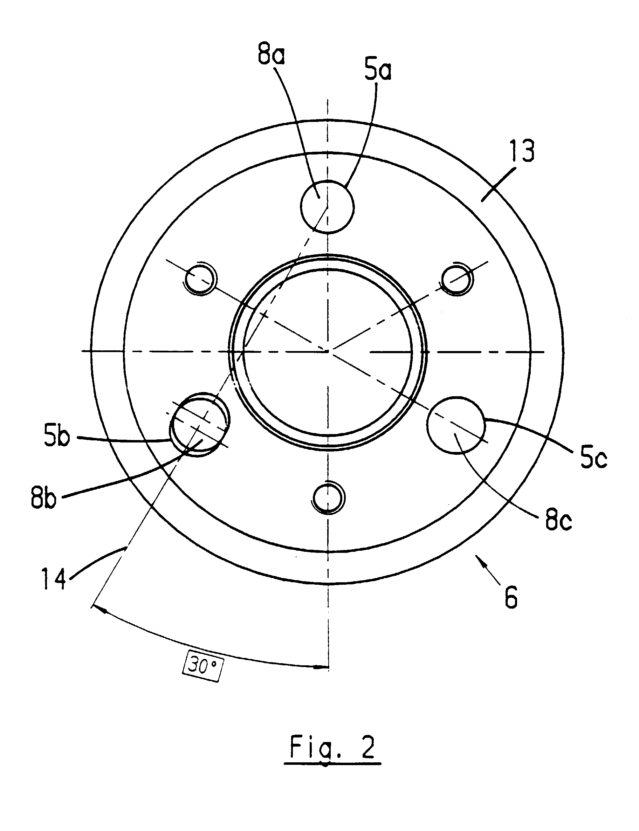

- Fig. 2 u. 3: Schnittdarstellungen von zwei weiteren Varianten des vorgeschlagenen optischen Systems.

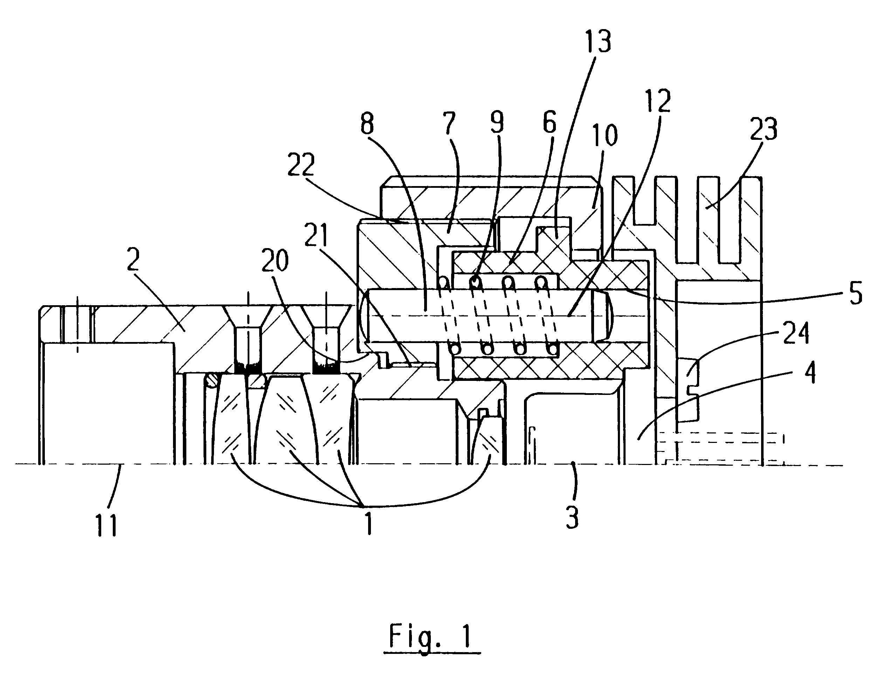

Übereinstimmende Teile sind in den Figuren mit denselben Bezugszeichen versehen. Fig.1 zeigt einen Schnitt durch ein bevorzugtes Ausführungsbeispiel des vorgeschlagenen optischen Systems entlang der optischen Achse. Ein aus mehreren Linsen bestehendes Linsensystem 1 ist in einer Aufnahme 2 aufgenommen. Eine Halbleiterlaserlichtquelle 3 ist in einer Fassung 4 aufgenommen. Die Fassung 4 wird in einer Aufnahme 6 gehalten. Mit der Aufnahme 2 des Linsensystems 1 ist eine Halterung 7 im Paßsitz (Bezugszeichen 20) verbunden. Die Halterung 7 ist im Ausführungsbeispiel auf die Aufnahme 2 aufgeschraubt (Bezugszeichen 21). In der Halterung 7 sind drei Paßstifte 8a, 8b, 8c (Fig.2) aufgenommen. Die Längsachse 12 der Paßstifte 8 sind zur optischen Achse 11 des Linsensystems parallel. Sie ragen aus der Aufnahme 2 des Linsensystems 1 heraus. Die herausragenden Teile der Paßstifte werden in Bohrungen 5a, 5b, 5c aufgenommen, die in der Aufnahme 6 der Laserlichtquelle 3 vorgesehen sind. Die Bohrung 5a ist als Paßbohrung ausgebildet, in der ein Paßstift 8a mit Gleitpassung sitzt. Der Paßstift 8b ist in einem Langloch 5b aufgenommen, dessen Längsachse 14 durch die Achse der Paßbohrung 5a zeigt. Der Paßstift 8b sitzt im Langloch 5b in einer Gleitpassung und verhindert eine Rotation der Aufnahme 6 um die Achse der Paßbohrung 5a.

Die Paßbohrung 5a verhindert die Rotation der Lichtquellenaufnahme 6 gegenüber dem Linsensystem 1. Der Paßstift 8b im Langloch 5b begrenzt das Umkehrspiel bzw. den Taumelfehler durch die Passungskombinationen "5a" - "8a" und "5b" - "8b". Die Bohrung 5c ist überhöht ausgeführt und dient nur zur Aufnahme des Stiftes 8c.

Jeder Paßstift 8 dient als Führung für eine Feder 9, die zwischen der Aufnahme 6 für die Laserlichtquelle und der Halterung 7 angeordnet ist. Die Aufnahme 6 für die Laserlichtquelle 3 besitzt einen radialen Flansch 13. Ein Ring 10 ist über ein Gewinde 22 mit der Halterung 7 verbunden. Der Ring 10 hintergreift den Flansch 13 und hält somit die Aufnahme 6 für die Laserlichtquelle an der Halterung 7 und somit an der Aufnahme 2 für das Linsensystem 1. An die Aufnahme 6 für die Laserlichtquelle kann ein Haltering 23 mittels Schrauben 24 aufgeschraubt sein. Der Haltering 23 kann auch als Kühlkörper ausgebildet sein. Zum Austausch der Optik ist lediglich die Schraubverbindung zwischen Aufnahme 2 und Halterung 7 zu lösen. Durch Verdrehen des z.B. als Rändelring ausgebildeten Ringes 10 kann die axiale Position der Aufnahme 6 und damit die Position der Laserlichtquelle 3 gegenüber dem Linsensystem verändert werden. Das System ist somit bezüglich der Z-Achse leicht justierbar. Bei der Justage bleibt die Orientierung der Diode erhalten. Dies ist aufgrund der elliptischen Abstrahlrichtung und der Lage des Astigmatismus erforderlich.

Die Aufnahme 6 für die Lichtquelle 3 besteht aus isolierendem Material und garantiert somit die Potentialfreiheit zwischen der Aufnahme 2 für das Linsensystem und der Lichtquelle. Die Aufnahme 6 begrenzt den Schielwinkel auf weniger als 10 mrad und garantiert, daß der Taumelfehler während der Translation viel kleiner ist als der Schielwinkel. Bei der Positionierung ergibt sich keine Veränderung des Schielwinkels.

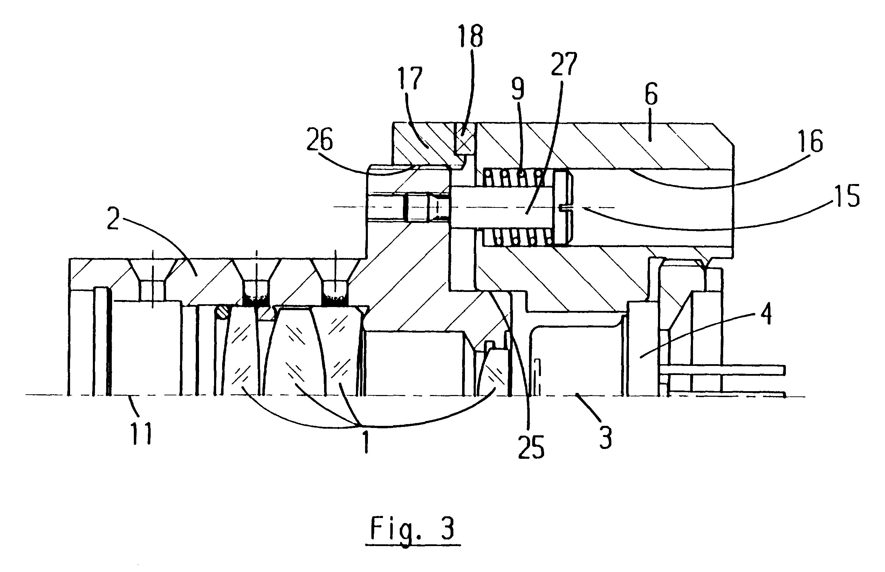

Gemäß Fig.3 nimmt die Aufnahme 2 für das Linsensystem 1 die weitere Aufnahme 6 für die Laserlichtquelle 3 in Richtung der optischen Achse verstellbar im Paßsitz (Bezugszeichen 25)auf. In der Aufnahme 2 für das Linsensystem sind drei Ansatzschrauben 27 verankert. Die Längsachsen 15 der Ansatzschrauben erstrecken sich im wesentlichen parallel zur optischen Achse 11. In der Aufnahme 6 für die Laserlichtquelle sind Bohrungen 16 zur Aufnahme der Ansatzschraube 27 vorgesehen. Die Aufnahme 6 für die Laserlichtquelle 3 und Ansatzschraube 27 sind jeweils mittels einer Feder 9 axial verfedert. Die Position der Aufnahme 6 für die Laserlichtquelle 3 wird durch einen Ring 17 festgelegt. Ring 17 ist über ein Gewinde 26 mit der Aufnahme 2 für das Linsensystem verbunden. Im Bereich der Anlageflächen des Ringes 17 und der Aufnahme 6 für die Laserlichtquelle ist ein Gleitelement 18 angeordnet, das mit dem Ring 17 oder der Aufnahme 6 verbunden ist.

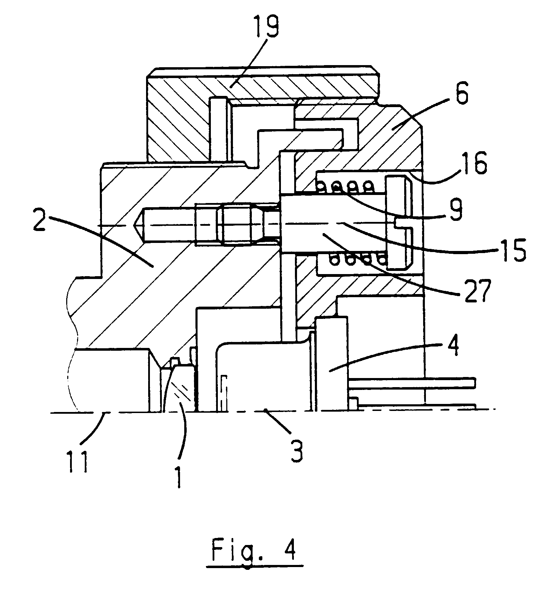

Gemäß Fig.4 wird die Aufnahme 6 für die Laserlichtquelle 3 mittels eines als Differenzschraube ausgebildeten Ringes 19 an der Aufnahme 2 für das Linsensystem 1 gehalten.

Im Ausführungsbeispiel ist ein optisches System kleiner Baugröße und geringen Gewichts beschrieben. Das vorgeschlagene optische System ist aber auch auf andere Größen skalierbar.

## Patentansprüche

1. Optisches System mit einem Linsensystem (1) in einer Aufnahme (2), mit einer Lichtquelle (3) in einer Fassung (4), mit einem Federglied (9) zwischen Fassung und Aufnahme und mit einer Einrichtung, die die Lage der Lichtquelle in Richtung der optischen Achse des Linsensystems gegenüber diesem festlegt, dadurch gekennzeichnet, daß in der Aufnahme (2) des Linsensystems (1) wenigstens zwei Paßstifte (8) in Preßpassung aufgenommen sind, deren Längsachsen (12) zur optischen Achse (11) des Linsensystems (1) parallel sind und die aus der Aufnahme (2) des Linsensystems (1) herausragen, daß die Fassung (4) der Lichtquelle (3) in einer weiteren Aufnahme (6) gehalten ist, in der Bohrungen (5a, 5b, 5c) zur Aufnahme der Paßstifte (8) vorgesehen sind, wobei eine der Bohrungen (5a) eine Paßbohrung ist, in der der entsprechende Paßstift (8a) parallel zur optischen Achse bewegbar mit Gleitpassung sitzt, daß zwischen der Aufnahme (6) für die Lichtquelle (3) und der Aufnahme (2) des Linsensystems (1) im Bereich der Paßstifte (8) je ein Federglied (9) angeordnet ist und daß die Aufnahme (6) für die Lichtquelle (3) in Richtung der optischen Achse (11) verstellbar an der Aufnahme (2) des Linsensystems (1) gehalten ist.

2. Optisches System nach Anspruch 1, dadurch gekennzeichnet, daß die Paßstifte (8) in einer Halterung (7) aufgenommen sind, die im Paßsitz mit der Aufnahme (2) des Linsensystems (1) verbunden ist.

3. Optisches System nach einem der Ansprüche 1 oder 2, dadurch gekennzeichnet, daß die Paßstifte (8) als Führung für das jeweilige Federglied (9) dienen.

4. Optisches System nach einem der Ansprüche 1 bis 3, dadurch gekennzeichnet, daß einer der Paßstifte (8b) in einem Langloch (5b) aufgenommen ist, dessen Längsachse (14) durch die Achse der Paßbohrung (5a) zeigt, wobei dieser Paßstift (8b) in dem Langloch (5b) parallel zur optischen Achse bewegbar in einer Gleitpassung sitzt und eine Rotation der Aufnahme (6) für die Lichtquelle (3) um die Achse der Paßbohrung (5a) verhindert.

5. Optisches System nach einem der Ansprüche 1 bis 4, dadurch gekennzeichnet, daß die Aufnahme (6) für die Lichtquelle (3) einen radialen Flansch (13) aufweist und daß diese Aufnahme von einem den Flansch (13) hintergreifenden Ring (lo) an der Aufnahme (2) für das Linsensystem (1) oder an der Halterung (7) gehalten wird.

6. Optisches System nach dem Oberbegriff des Anspruchs 1, dadurch gekennzeichnet, daß in der Aufnahme (2) für das Linsensystem (1) wenigstens zwei Ansatzschrauben (27) verankert sind, deren Längsachsen (15) sich im wesentlichen parallel zur optischen Achse (11) erstrecken, daß die Fassung (4) der Lichtquelle (3) in einer weiteren Aufnahme (6) im Paßsitz gehalten ist, daß die Aufnahme (2) für das Linsensystem (1) die weitere Aufnahme (6) für die Lichtquelle (3) in Richtung der optischen Achse (11) verstellbar im Paßsitz aufnimmt, daß in der Aufnahme (6) für die Lichtquelle Bohrungen (16) zur Aufnahme der Ansatzschrauben (27) vorgesehen sind, daß zwischen der Aufnahme (6) für die Lichtquelle (3) und jeder Ansatzschraube (27) ein sich an dieser Aufnahme (6) und der Ansatzschraube (27) abstützendes Federglied (9) angeordnet ist, wodurch die Aufnahme (6) für die Lichtquelle (3) an der Aufnahme (2) des Linsensystems (1) in Richtung auf dieses gehalten wird.

7. Optisches System nach Anspruch 6, dadurch gekennzeichnet, daß die Aufnahme (6) für die Lichtquelle (3) an einem mit der Aufnahme (2) für das Linsensystem (1) verbundenen Ring (17) anliegt.

8. Optisches System nach Anspruch 7, dadurch gekennzeichnet, daß der Ring(17) mit der Aufnahme (2) für das Linsensystem (1) verschraubt ist.

9. Optisches System nach Anspruch 7 oder 8, dadurch gekennzeichnet, daß im Bereich der Anlageflächen des Ringes (17) und der Aufnahme (6) ein mit dem Ring (17) oder der Aufnahme (6) verbundenes Gleitelement (18) angeordnet ist.

10. Optisches System nach Anspruch 6, dadurch gekennzeichnet, daß die Aufnahme (6) für die Lichtquelle (3) mittels eines als Differenzschraube ausgebildeten Ringes (19) an der Aufnahme (2) für das Linsensystem (1) gehalten wird.

11. Optisches System nach einem der Ansprüche 1 bis 10, dadurch gekennzeichnet, daß die Aufnahme (6) für die Lichtquelle (3) aus elektrisch isolierendem Material besteht.

12. Optisches System nach einem der Ansprüche 1-11, dadurch gekennzeichnet, daß die Lichtquelle ein Halbleiterlaser ist.

## Claims

1. Optical system with a lens system (1) in a housing (2), with a light source (3) in a holder (4), with a resilient member (9) between holder and housing and with a device which secures the position of the light source in the direction of the optical axis of the lens system relative to the latter,
characterised in that in the housing (2) of the lens system (1) there are accommodated at least two alignment pins (8) with a press fit, whose longitudinal axes (12) are parallel to the optical axis (11) of the lens system (1), and which project out of the housing (2) of the lens system (1),
in that the holder (4) of the light source (3) is held in a further housing (6) in which are provided bores (5a, 5b, 5c) for accommodating the alignment pins (8), one of the bores (5a) being a close-tolerance bore, in which the corresponding alignment pin (8a) sits movably parallel to the optical axis with a sliding fit,
in that between the housing (6) for the light source (3) and the housing (2) of the lens system (1) in the region of the alignment pins (8) there is respectively disposed a resilient member (9),
and in that the housing (6) for the light source (3) is displaceably held in the direction of the optical axis (11) on the housing (2) of the lens system (1).

2. Optical system according to claim 1, characterised in that the alignment pins (8) are accommodated in a securing system (7) which is connected with a snug fit to the housing (2) of the lens system (1).

3. Optical system according to one of claims 1 or 2, characterised in that the alignment pins (8) serve as guides for the respective resilient member (9).

4. Optical system according to one of claims 1 to 3, characterised in that one of the alignment pins (8) is accommodated in a slot (5b) whose longitudinal axis (14) points through the axis of the close-tolerance bore (5a), said alignment pin (8b) sitting in the slot (5b) parallel to the optical axis and movably with a sliding fit, and prevents rotation of the housing (6) for the light source (3) about the axis of the close-tolerance bore (5a).

5. Optical system according to one of claims 1 to 4, characterised in that the housing (6) for the light source (3) has a radial flange (13), and in that this housing is held by a ring (10) engaging behind the flange (13) on the housing (2) for the lens system (1) or on the securing system (7).

6. optical system according to the preamble to claim 1,
characterised in that there are anchored in the housing (2) for the lens system (1) at least two set screws (27) whose longitudinal axes (15) extend substantially parallel to the optical axis (11),
in that the holder (4) of the light source (3) is held with a snug fit in a further housing (6),
in that the housing (2) for the lens system (1) accommodates the further housing (6) for the light source (3) with a snug fit and displaceably in the direction of the optical axis (11),
in that there are provided in the housing (6) for the light source bores (16) for accommodating the set screws (27),
in that there is disposed between the housing (6) for the light source (3) and each set screw (27) a resilient member (9) supported on this housing (6) and on the set screw (27), so that the housing (6) for the light source (3) is held on the housing (2) for the lens system (1) in the direction of the latter.

7. Optical system according to claim 6, characterised in that the housing (6) for the light source (3) abuts on a ring (17) connected to the housing (2) for the lens system (1).

8. Optical system according to claim 7, characterised in that the ring (17) is screwed to the housing (2) for the lens system (1).

9. Optical system according to claim 7 or 8, characterised in that, in the region of the contact surfaces of the ring (17) and of the housing (6), there is disposed a sliding member (18) connected to the ring (17) or to the housing (6).

10. Optical system according to claim 6, characterised in that the housing (6) for the light source (3) is held by means of a ring (19) in the form of a differential ring on the housing (2) for the lens system (1).

11. Optical system according to one of claims 1 to 10, characterised in that the housing (6) for the light source (3) is made of electrically insulating material.

12. Optical system according to one of claims 1 to 11, characterised in that the light source is a semiconductor laser.

## Revendications

1. Système optique comportant un système (1) de lentilles disposé dans un logement (2), une source de lumière (3) disposée dans une monture (4), un organe (9) à ressort disposé entre la monture et le logement, et un dispositif qui détermine la position de la source de lumière dans la direction de l'axe optique du système de lentilles, par rapport à ce dernier, caractérisé en ce que, dans le logement (2) du système (1) de lentilles sont reçus au moins deux goujons d'assemblage (8) avec ajustage serré, dont les axes longitudinaux (12) sont parallèles à l'axe optique (11) du système (1) de lentille et qui dépassent hors du logement (2) du système (1) de lentilles, en ce que la monture (4) de la source lumineuse (3) est maintenue dans un autre logement (6), dans lequel des perçages (5a, 5b, 5c) sont prévus pour la réception des goujons d'assemblage (8), l'un (5a) des perçages étant un perçage ajusté dans lequel le goujon d'assemblage correspondant (8a) est placé avec ajustement glissant et possibilité d'être déplacé parallèlement à l'axe optique, en ce qu'entre le logement (6) de la source lumineuse (3) et le logement (2) du système (1) de lentilles, un organe respectif à ressort (9) est disposé dans la zone des goujons d'assemblage (8) pour chacun de ceux-ci et en ce que le logement (6) de la source de lumière (3) est maintenu déplaçable et réglable dans la direction de l'axe optique, sur le logement (2) du système (1) de lentilles.

2. Système optique selon la revendication 1, caractérisé en ce que les goujons d'assemblage (8) sont reçus dans un dispositif de maintien (7), qui est relié avec ajustement fin au logement (2) du système (1) de lentilles.

3. Système optique selon l'une des revendications 1 ou 2, caractérisé en ce les goujons d'assemblage (8) servent de guidage pour l'organe à ressort (9) respectif.

4. Système optique selon l'une des revendications 1 à 3, caractérisé en ce que l'un (8b) des goujons d'assemblage est logé dans un trou de section oblongue (5b), dont l'axe longitudinal (14) passe par l'axe du perçage ajusté (5a), ce goujon ajusté (8b) étant monté avec ajustement glissant en pouvant être déplacé, dans le trou long (5b), parallèlement à l'axe optique et empêchant une rotation du logement (6) de la source de lumière (3) sur l'axe du perçage ajusté (5a).

5. Système optique selon l'une des revendications 1 à 4, caractérisé en ce que le logement (6) de la source de lumière (3) présente un rebord radial (13) et en ce que ce logement est maintenu contre le logement (2) du système (1) de lentilles ou sur le dispositif de maintien (7), au moyen d'un anneau (10) passant derrière le rebord (13).

6. Système optique selon le préambule de la revendication 1, caractérisé en ce que dans le logement (2) du système (1) de lentilles sont ancrées au moins deux vis (27) d'épaulement, dont les axes longitudinaux (15) s'étendent sensiblement parallèlement à l'axe optique (11), en ce que la monture (4) de la source de lumière (3) est maintenue avec ajustement fin et serré dans un autre logement (6), en ce que le logement (2) du système (1) de lentilles reçoit, avec ajustement fin, l'autre logement (6) de la source de lumière (3), de façon réglable dans la direction de l'axe optique (11), en ce que dans le logement (6) de la source de lumière sont prévus des perçages (16) destinés à recevoir les vis (27) à épaulement, en ce qu'entre le logement (6) de la source de lumière (3) et chaque vis (27) à épaulement est disposé un organe à ressort (9) qui s'appuie sur ce logement (6) et sur la vis (27) à épaulement, grâce à quoi le logement (6) de la source lumineuse (3) est maintenu contre le logement (2) du système (1) de lentilles, dans la direction de celui-ci.

7. Système optique selon la revendication 6, caractérisé en ce que le logement (6) de la source lumineuse (3) est appuyé sur une bague (17) reliée au logement (2) du système (1) de lentilles.

8. Système optique selon la revendication 7, caractérisé en ce que la bague (17) est vissée sur le logement (2) du système (1) de lentilles.

9. Système optique selon la revendication 7 ou 8, caractérisé en ce que, dans la zone des surfaces d'appui de la bague (17) et du logement (6), est disposé un élément glissant (18) relié à la bague (17) ou au logement (6).

10. Système optique selon la revendication 6, caractérisé en ce que le logement (6) de la source lumineuse (3) est maintenu contre le logement (2) du système (1) de lentilles au moyen d'une bague (19) conformée en vis différentielle.

11. Système optique selon l'une des revendications 1 à 10, caractérisé en ce que le logement (6) de la source lumineuse (3) est constitué d'un matériau électriquement isolant.

12. Système optique selon l'une des revendications 1 à 11, caractérisé en ce que la source de lumière est un laser à semi-conducteur.
